# EUROPEAN PATENT APPLICATION

(11) **EP 0 817 016 A2**
(43) Date of publication of application: **07.01.1998**
(21) Application number: 97110674.5
(22) Date of filing: 30.06.1997
(51) Int. Cl.: G06F 9/46

(54) **Software ICS for high level application frameworks**

(30) Priority: 03.07.1996 US 675846
(71) Applicant: SIEMENS AKTIENGESELLSCHAFT, 80333 München (DE)
(72) Inventor: Dorn, Karlheinz, Dipl.-Inf., 90562 Kalchreuth (DE); Becker, Detlef, Dipl.-Ing., 91096 Möhrendorf (DE); Quehl, Dietrich, Dipl.-Ing., 91052 Erlangen (DE); Reinfelder, Hans-Erich, Dr., 91054 Erlangen (DE)

(57) **Abstract**

An object oriented computing system, comprising objects with semanticless, dynamically linkable inputs and outputs; and an event communication framework providing automated, pattern-based, fully distributable events.

## Description

### BACKGROUND OF THE INVENTION

The present invention generally is directed to object oriented multi-programming systems. More, particularly, the invention is directed to methods and means for interconnecting software modules or building blocks.

As set forth in U.S. Patent No. 5,499,365, full incorporated herein by reference, object oriented programming systems and processes, also referred to as "object oriented computing environments," have been the subject of much investigation and interest. As is well known to those having skill in the art, object oriented programming systems are composed of a large number of "objects." An object is a data structure, also referred to as a "frame," and a set of operations or functions, also referred to as "methods," that can access that data structure. The frame may have "slots," each of which contains an "attribute" of the data in the slot. The attribute may be a primitive (such as an integer or string) or an object reference which is a pointer to another object. Objects having identical data structures and common behavior can be grouped together into, and collectively identified as a "class."

Each defined class of objects will usually be manifested in a number of "instances". Each instance contains the particular data structure for a particular example of the object. In an object oriented computing environment, the data is processed by requesting an object to perform one of its methods by sending the object a "message". The receiving object responds to the message by choosing the method that implements the message name, executing this method on the named instance, and returning control to the calling high level routine along with the results of the method. The relationships between classes, objects and instances traditionally have been established during "build time" or generation of the object oriented computing environment, i.e., prior to "run time" or execution of the object oriented computing environment.

In addition to the relationships between classes, objects and instances identified above, inheritance relationships also exist between two or more classes such that a first class may be considered a "parent" of a second class and the second class may be considered a "child" of the first class. In other words, the first class is an ancestor of the second class and the second class is a descendant of the first class, such that the second class (i.e., the descendant) is said to inherit from the first class (i.e., the ancestor). The data structure of the child class includes all of the attributes of the parent class.

Object oriented systems have heretofore recognized "versions" of objects. A version of an object is the same data as the object at a different point in time. For example, an object which relates to a "work in progress", is a separate version of the same object data which relates to a completed and approved work. Many applications also require historical records of data as it existed at various points in time. Thus, different versions of an object are required.

Two articles providing further general background are E.W. Dijkstra, The Structure of "THE" Multi programming System, Communications of the ACM, Vol. 11, No. 5, May 1968, pp. 341-346, and C.A.R. Hoare, Monitors: Operating Systems Structuring Concepts, Communications of the ACM, Vol. 17, No. 10, October, 1974, pp. 549-557, both of which are incorporated herein by reference. The earlier article describes methods for synchronizing using primitives and explains the use of semaphores while the latter article develops Brinch-Hansen's concept of a monitor as a method of structuring an operating system. In particular, the Hoare article introduces a form of synchronization for processes and describes a possible method of implementation in terms of semaphores and gives a proof rule as well as illustrative examples.

As set forth in the Hoare article, a primary aim of an operating system is to share a computer installation among many programs making unpredictable demands upon its resources. A primary task of the designer is, therefore, to design a resource allocation with scheduling algorithms for resources of various kinds (for example, main store, drum store, magnetic tape handlers, consoles). In order to simplify this task, the programmer tries to construct separate schedulers for each class of resources. Each scheduler then consists of a certain amount of local administrative data, together with some procedures and functions which are called by programs wishing to acquire and release resources. Such a collection of associated data and procedures is known as a monitor.

The adaptive communication environment (ACE) is an object-oriented type of network programming system developed by Douglas C. Schmidt, an Assistant Professor with the Department of Computer Science, School of Engineering and Applied Science, Washington University. ACE encapsulates user level units and WIN32 (Windows NT and Windows 95) OS mechanisms via type-secured, efficient and object-oriented interfaces:
- IPC mechanisms - Internet-domain and UNIX-domain sockets, TLI, Named pipes (for UNIX and Win 32) and STREAM pipes;
- Event multiplexing - via select() and poll() on UNIX and WaitForMultipleObjects on Win 32;
- Solaris threads, POSIX Pthreads, and Win 32 threads;
- Explicit dynamic linking facilities - e.g., dlopen/dlsym/dlclose on UNIX and LoadLibrary/GetProc on Win 32;
- Memory-mapped files;
- System VIPC - shared memory, semaphores, message queues; and
- Sun RPC (GNU rpc++).

In addition, ACE contains a number of higher-level class categories and network programming frameworks to integrate and enhance the lower-level C++ wrappers. The higher-level components in ACE support the dynamic configuration of concurrent network daemons composed of application services. ACE is currently being used in a number of commercial products including ATM signaling software products, PBX monitoring applications, network management and general gateway communication for mobile communications systems and enterprise-wide distributed medical systems. A wealth of information and documentation regarding ACE is available on the worldwide web at the following universal resource locator:
http://www.cs.wustl.edu/...schmidt/ACE-overview.html.

The following abbreviations are or may be utilized in this application:
- Thread - a parallel execution unit within a process. A monitor synchronizes, by forced sequentialization, the parallel access of several simultaneously running Threads, which all call up functions of one object that are protected through a monitor.
- Synchronizations-Primitive - a means of the operating system for reciprocal justification of parallel activities.
- Semaphore - a Synchronizations-Primitive for parallel activities.
- Mutex - a special Synchronizations-Primitive for parallel activities, for mutual exclusion purposes, it includes a critical code range.
- Condition Queue - an event waiting queue for parallel activities referring to a certain condition.
- Gate Lock - a mutex of the monitor for each entry-function, for protection of an object, for allowing only one parallel activity at a time to use an Entry-Routine of the object.
- Long Term Scheduling - longtime delay of one parallel activity within a condition queue or event waiting queue for parallel activities.
- Broker - a distributor.

In addition, the following acronyms are or may be used herein:
- AFM: Asynchronous Function Manager
- SESAM: Service & Event Synchronous Asynchronous Manager
- PAL: Programmable Area Logic
- API: Application Programmers Interface
- IDL: Interface Definition Language
- ATOMIC: Asynchron Transport Optimizing observer-pattern-like system supporting several Modes (client/server - push/pull) for an IDL-less Communication subsystem (This is the subject of commonly assigned and copending application, Attorney Docket No. GR 96 P 3108 E)
- XDR: External Data Representation
- I/O: Input/Output
- IPC: Inter Process Communication
- CSA: Common Software Architecture (a Siemens AG computing system convention)
- SW: Software

In the past, interface of software modules or building blocks has been hard coded in an application program interface (API). This solution was linkable into a process, but was not location transparent. Additionally, the interface has been provided by way of an interface definition language (IDL) with hard coded object references.

### SUMMARY OF THE INVENTION

The present invention provides a method and/or means for combining independent, semantic-less software modules or building blocks into large applications, without changing any code within the building blocks and without writing any adapters. To that end, the functionality of a module or building block is fully separated from the surrounding environment, so that it need not be located within the same process, and can instead be distributed over a network, without the need of an interface definition language.

In an embodiment, the invention provides a method for designing software modules comprising the steps of:
defining input and output events that are fully distributable;
configuring dynamic linkable, semantic-free software modules by input and output connections points;
providing autorouted pattern based fully distributable events based on an event communication framework.

In an embodiment, the invention provides an object oriented computing system, comprising objects with semanticless, dynamically linkable inputs and outputs; and an event communication framework providing automated, pattern- based, fully distributable events.

In an embodiment, the inputs and outputs of the objects are provided by links to CsaConnectable and CsaRemote objects, respectively.

In an embodiment, each data structure associated with the inputs and outputs is described in a separate header file which can be used by every object to be linked.

In an embodiment, each object is a shared library which is dynamically linkable at runtime by an ASCII configuration filing names of the inputs and outputs of the objects.

These and other features of the invention are discussed in greater detail below in the following detailed description of the presently preferred embodiments with reference to the accompanying drawings.

### BRIEF DESCRIPTION OF THE DRAWINGS

- Figure 1: illustrates a comparison of hardware and software ICs.
- Figure 2: illustrates a application utilizing software ICs.
- Figure 3: illustrates a comparison of hardware PALs and software PALs.

### COPENDING APPLICATIONS

The following commonly assigned copending applications are incorporated herein by reference:

| Title | Application NUMBER | Filing Date | Attorney Docket No. |
|---|---|---|---|
| MONITOR SYSTEM FOR SYNCHRONIZATION OF THREADS WITHIN A SINGLE PROCESS | | | GR 96 P 3106 E |
| SERVICE AND EVENT SYNCHRONOUS/ASYNCHRONOUS MANAGER | | | GR 96 P 3107 E |
| ASYNCHRONOUS TRANSPORT OPTIMIZING OBSERVER-PATTERN LIKE SYSTEM SUPPORTING SEVERAL MODES FOR AN INTERFACE DEFINITION LANGUAGE-LESS COMMUNICATION SUBSYSTEM | | | GR 96 P 3108 E |

### DETAILED DESCRIPTION OF THE PRESENTLY PREFERRED EMBODIMENTS

As set forth above, the present invention provides an approach for combining independent, semantic-less building blocks into larger applications without changing any code within the building blocks and without writing any adapters.

The result is a system or architecture wherein software blocks can be combined in the same manner that integrated circuits are combinable.

For the purposes of this invention, the way a software building block connects to its outside environment (which may consist of one or more other building blocks as well as user written code) is via CsaConnectable (supplier) and CsaRemote (consumer) objects/classes, regardless whether the other endpoint of the connection resides in the same process or on a remote host (with optimization, if local). This rule is applied to all building blocks. For further information regarding the CsaConnectable and CsaRemote objects/classes, reference should be made to the commonly assigned and copending applications incorporated by reference above, and in particular Attorney Docket Nos. GR 96 P 3107 E and GR 96 P 3108 E, respectively.

Each data structure associated with the inputs and outputs of the building blocks is described in a separate header file which can be used by every building block that is to be connected.

Each building block is realized or constructed as a shared library which is dynamically linked at runtime by as ASCII configuration file as is used in public domain communication packages. The names of the inputs and outputs are assigned during dynamic linking and this allows changing the configuration without any recompilation or relinking.

The great advantage of this approach is that a flexible and high level pattern arises from the optimal combination of other simple, well designed, and semantic-less patterns. Again, this mechanism is very similar to combining integrated circuits on boards in the hardware world.

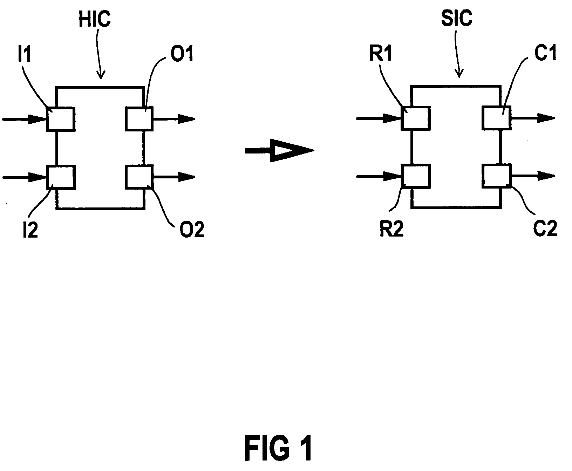

Figure 1 is useful for comparing the similarities between hardware integrated circuits (ICs) and the present software objects. In Figure 1, a hardware IC HIC has two input pins I1 and I2 and two output pins O1 and O2. Similarly, the software object SIC has two inputs R1 and R2 via CsaRemote and two outputs C1 and C2 via CsaConnectable.

An example of coding for implementing such a software IC system follows:

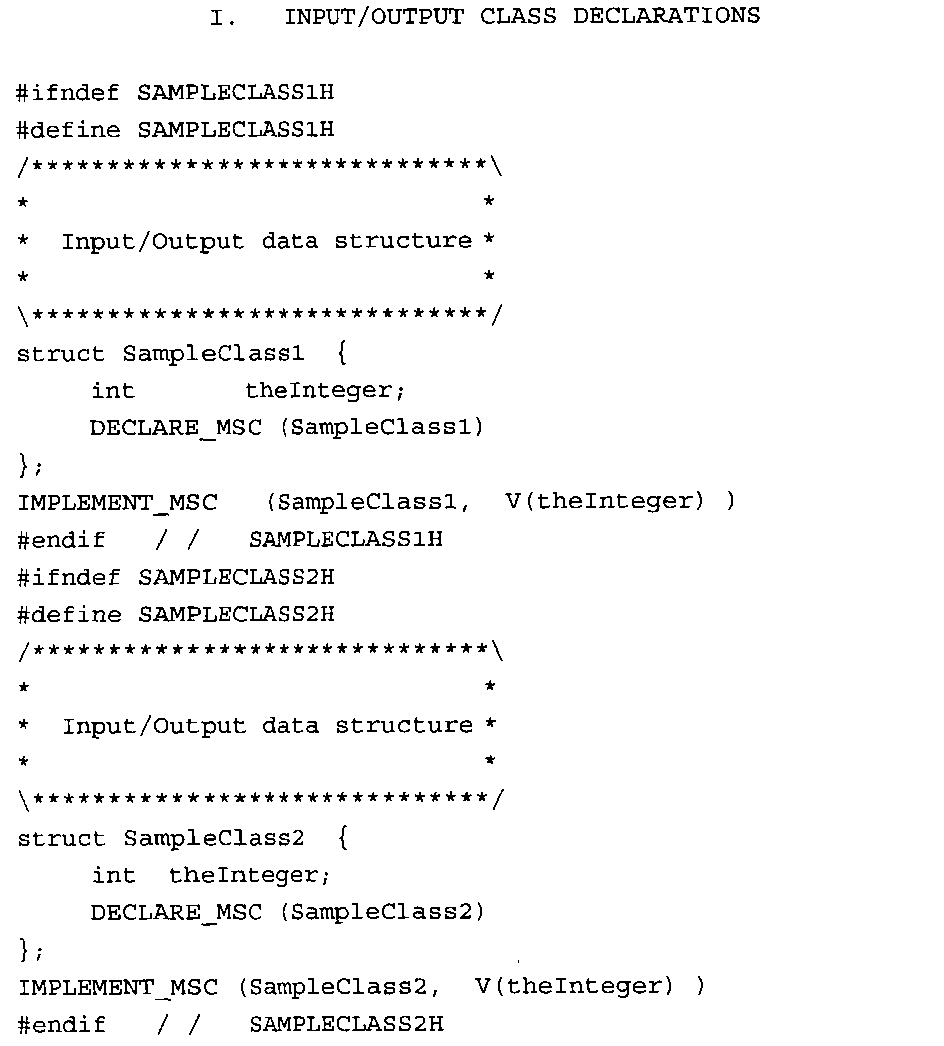

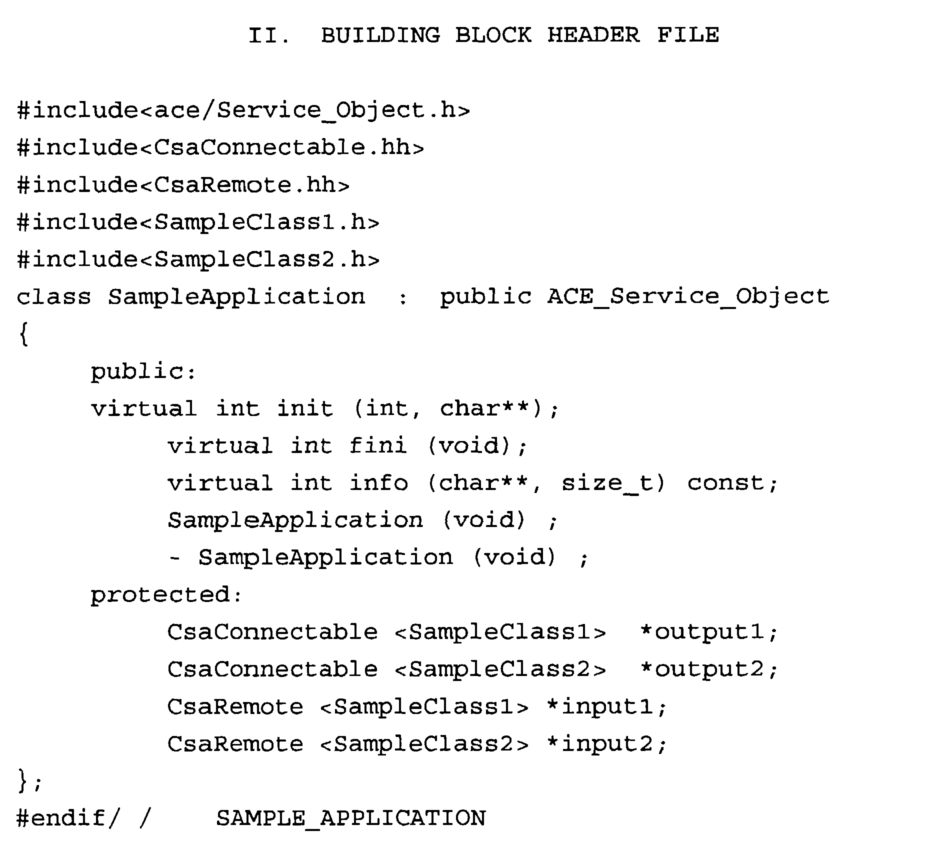

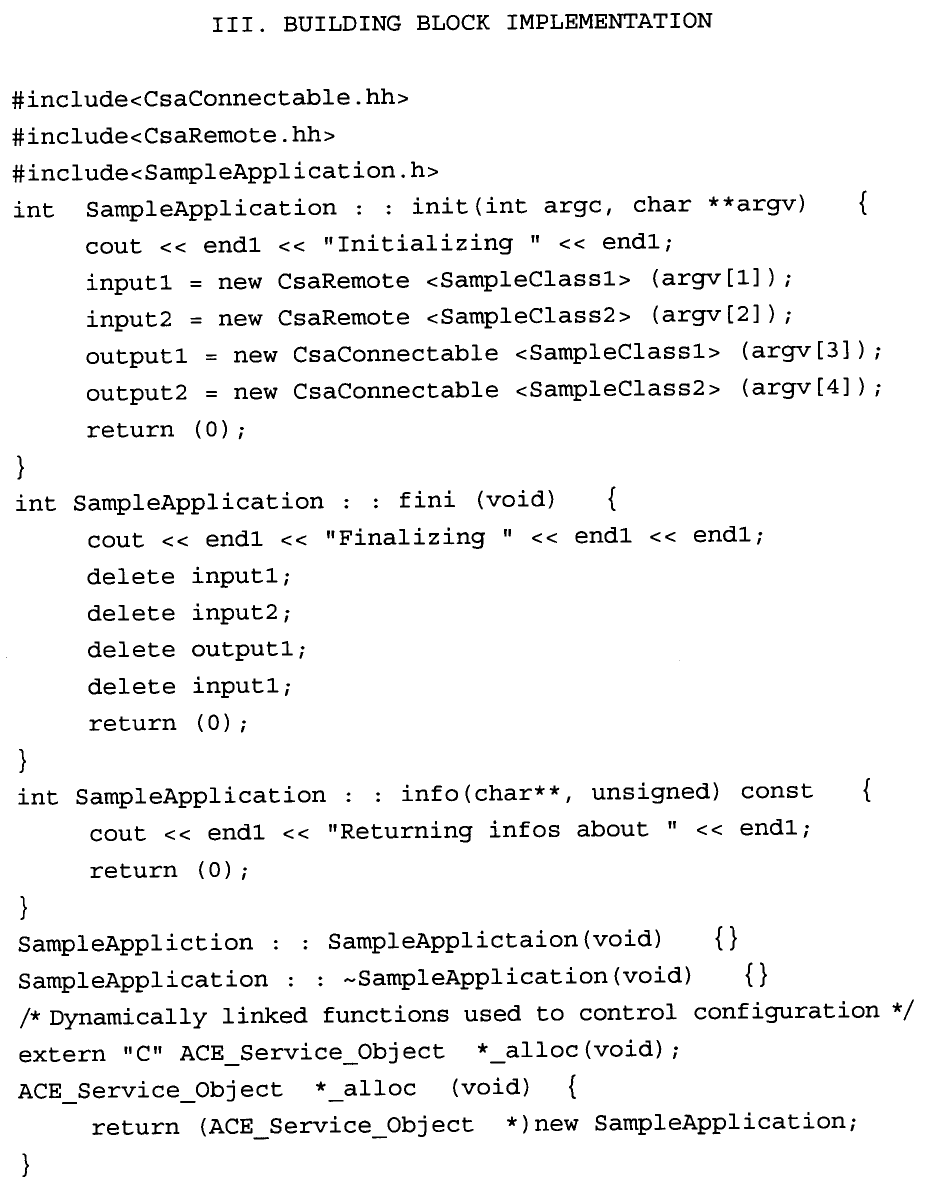

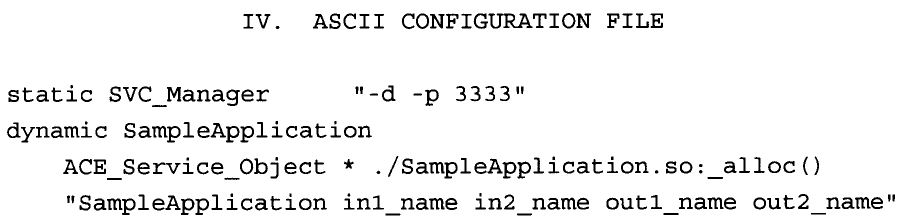

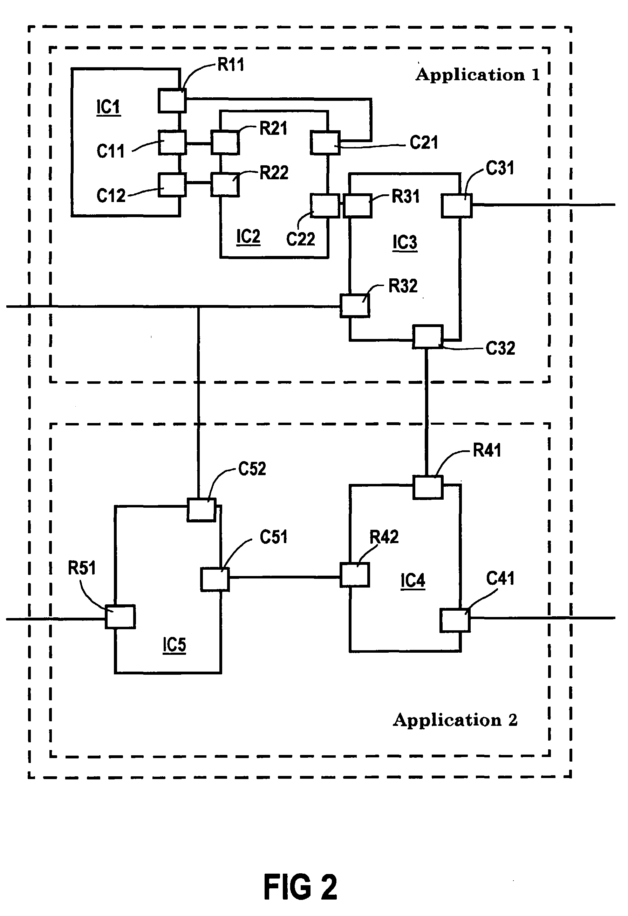

In Figure 2 there is illustrated in block diagram form a possible implementation of software ICs in a system with more than one application. In Figure 2 there are illustrated five software ICs: IC1, IC2, IC3, IC4 and IC5. Additionally, there are two applications, Application 1 and Application 2, employing the software ICs. Application 1 contains software ICs IC1, IC2 and IC3, while Application 2 contains software ICs IC4 and IC5. As can be seen, Application 1 and Application 2 interact with each other, as well as externally of the process or system containing Application 1 and Application 2, via inputs and outputs of the software ICs.

As illustrated, IC1 has two inputs C11 and C12. IC1 also has one output via R11. The inputs C11 and C12 are connected to two outputs of IC2, R21 and R22, respectively. An input C21 of IC2 is connected to the output R11 of IC1.

IC3 has an output R31 connected to the input C22 of IC2, and input C31 connected externally of the process containing the applications, an input C32 connected to an output R41 of IC4 and an output R32 connected to an input C52 of IC5 and externally of the system. In addition to output R41, IC4 has a input C41 connected externally of the system and an output R42 connected to an input C51 of the IC5. IC5 also has an output R51 connected externally of the process or system containing the applications.

The inputs and output are via CsaConnectable and CsaRemote as described above. Moreover, the data are autorouted to the various inputs and outputs via dynamic linking, thereby allowing changing the configuration and interaction of the applications without requiring recompilation or relinking.

In addition, the foregoing software IC principles can be combined with a pattern (task) from ACE, to obtain a very powerful software building block that behaves like a hardware PAL, and that offers the power of synchronous behavior within the building block and asynchronous behavior/interaction outside

of the building block. The internal processing rate (the counterpart to a clock rate in a hardware PAL) is thus fully independent from the event input/output rate of the connected environment. The necessary buffering to achieve the synchronization is also provided without concern to semantics. Similar to hardware PAL synchronization solutions, the synchronization task can be configured into a software PAL, as needed.

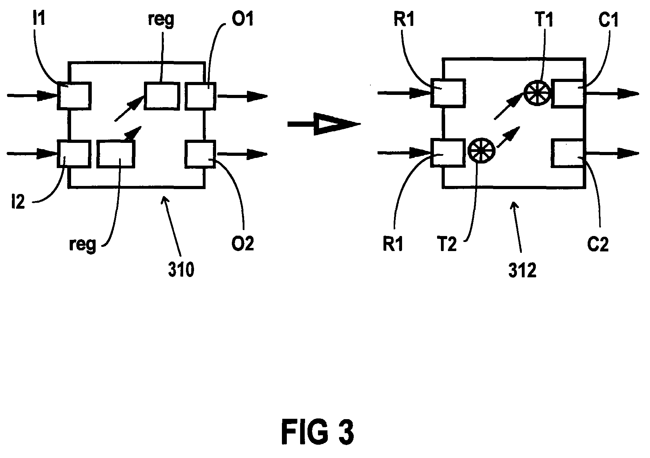

Figure 3 illustrates a comparison between hardware PALs and Software PALs. As illustrated, a hardware PAL 310, like a hardware IC, can have two input pins I1 and I2 and two output pins O1 and O2. However, within the hardware PAL 310 there also are provided registers/buffers reg in which incoming and outgoing data or signals are stored.

The counterpart software PAL 312 has inputs R1 and R2 and outputs C1 and C2 like the software IC described previously. However, also illustrated are tasks T1 and T2 that replace the registers/buffers reg of the hardware PAL 310. In other respects, the software PAL is similar to a software IC, as described above.

A software PAL provides inner logic flexibility to a software IC by means of active object support. Incoming events are able to be buffered by tasks, such as the task T1, before further processing by the inner logic. Further, outgoing events can be taken from a buffer, such as the task T2, thereby decoupling the events from the inner logic of the software PAL.

Although modifications and changes may be suggested by those skilled in the art, it is the intention of the inventors to embody within the patent warranted hereon all changes and modifications as reasonably and properly come within the scope of their contribution to the art.

## Claims

1. An object oriented computing system on a computer platform, comprising:
objects with semanticless, dynamically linkable inputs and outputs; and
an event communication framework providing automated, pattern-based, fully distributable events.

2. The object oriented computing system according to claim 1, wherein the inputs and outputs of the objects are provided via CsaConnectable and CsaRemote objects, respectively.

3. The object oriented computing system according to claim 2, wherein each data structure associated with the inputs and outputs is described in a separate header file which can be used by every object to be linked.

4. The object oriented computing system according to claim 2 or 3, wherein each object is a shared library which is dynamically linkable at runtime by an ASCII configuration filing names of the inputs and outputs of the objects.

5. An object oriented computing system on a computing system, comprising objects having dynamically linkable inputs and outputs and internal tasks for queuing of data transferred into and out from the objects via said inputs and outputs, respectively; and an event communication framework providing automated, pattern-based, fully distributable events.

6. The object oriented computing system according to claim 5, wherein the inputs and outputs of the objects are provided via CsaConnectable and CsaRemote objects, respectively.

7. The object oriented computing system according to claim 6, wherein each data structure associated with the inputs and outputs is described in a separate header file which can be used by every object to be linked.

8. The object oriented computing system according to claim 6 or 7, wherein each object is a shared library which is dynamically linkable at runtime by an ASCII configuration file containing names of the inputs and outputs of the objects.

9. A method for designing software modules in an object oriented computing system, comprising the steps of:
defining input and output events that are fully distributable;
configuring dynamic linkable, semantic-free software modules by input and output connections points;
providing autorouted pattern based fully distributable events based on an event communication framework.

10. A storage medium including object oriented code having an object oriented computing system on a computer platform, comprising:
objects with semanticless, dynamically linkable inputs and outputs; and
an event communication framework providing automated, pattern-based, fully distributable events.

11. The storage medium according to claim 10, wherein the inputs and outputs of the objects are provided via CsaConnectable and CsaRemote objects, respectively.

12. The storage medium according to claim 11, wherein each data structure associated with the inputs and outputs is described in a separate header file which can be used by every object to be linked.

13. The storage medium according to claim 11 or 12, wherein each object is a shared library which is dynamically linkable at runtime by an ASCII configuration filing names of the inputs and outputs of the objects.

14. A storage medium including object oriented code for an object oriented computing system on a computing system, comprising objects having dynamically linkable inputs and outputs and internal tasks for queuing of data transferred into and out from the objects via said inputs and outputs, respectively; and an event communication framework providing automated, pattern-based, fully distributable events.

15. The storage medium according to claim 14, wherein the inputs and outputs of the objects are provided via CsaConnectable and CsaRemote objects, respectively.

16. The storage medium according to claim 15, wherein each data structure associated with the inputs and outputs is described in a separate header file which can be used by every object to be linked.

17. The storage medium according to claim 15 or 16, wherein each object is a shared library which is dynamically linkable at runtime by an ASCII configuration file containing names of the inputs and outputs of the objects.

18. A storage medium including object oriented code for a method for designing software modules in an object oriented computing system, comprising the steps of:
defining input and output events that are fully distributable;
configuring dynamic linkable, semantic-free software modules by input and output connections points;
providing autorouted pattern based fully distributable events based on an event communication framework.
